# EUROPEAN PATENT APPLICATION

(11) **EP 1 909 021 A2**
(43) Date of publication of application: **09.04.2008**
(21) Application number: 07117244.9
(22) Date of filing: 26.09.2007
(51) Int. Cl.: F16M 11/14

(54) **Connection structure and joint**

(30) Priority: 02.10.2006 JP 2006271030
(71) Applicant: Sony Corporation, Minato-ku Tokyo 108-0075 (JP)
(72) Inventor: Kaneda, Hideo, Tokyo 108-0075 (JP); Chiba, Yoshio, Tokyo 108-0075 (JP); Kishi, Naotaka, Tokyo 108-0075 (JP); Kawahara, Hitoshi, Tokyo 108-0075 (JP)
(74) Representative: Körber, Martin Hans

(57) **Abstract**

Disclosed herein is a connection structure 50 including, a first spherical member 1604, a second spherical member 46, first and second clamping plates, a single external thread member, and first, second, third and forth clamping recessed portions.

## Description

### CROSS REFERENCES TO RELATED APPLICATIONS

The present invention contains subject matter related to Japanese Patent Application JP 2006-271030 filed in the Japan Patent Office on October 2, 2006, the entire contents of which being incorporated herein by reference.

### BACKGRGUND OF THE INVENTION

### 1. Field of the Invention

This invention relates to a connection structure and a joint.

### 2. Description of the Related Art

An attaching structure is known and disclosed in Japanese Patent Laid-Open No. 2000-287800 wherein a spherical member having a spherical surface is provided on the surface of an article such that the posture of an article can be changed through the spherical member.

### SUMMARY OF THE INVENTION

However, the attaching structure in the past is disadvantageous in that, since it includes a single spherical member, the degree of freedom in change of the posture of an article is low.

Therefore, it is demanded to provide a connection structure and a joint by which a high degree of freedom can be assured in change of the posture of an article.

According to an embodiment of the present invention, there is provided a connection structure including a first spherical member provided in a projecting manner on a first article, a second spherical member provided in a projecting manner on a second article, first and second clamping plates each having an elongated shape, and a single external thread member configured to fix the first and second clamping plates such that inner faces of the first and second clamping plates each of which is one of the opposite faces of the first or second clamping plate in the thicknesswise direction are opposed to each other, the first spherical member being formed spherically with a first radius, the second spherical member being formed spherically with a second radius, first and second clamping recessed portions being formed at locations of the inner face of the first clamping plate on the opposite sides in the longitudinal direction while a fitting hole is formed at a location between the first and second clamping recessed portions in such a manner as to extend through the first clamping plate and allow the external thread member to pass therethrough, third and fourth clamping recessed portions being formed at locations of the inner face of the second clamping plate on the opposite sides in the longitudinal direction while an internal thread is formed at a location between the third and fourth clamping recessed portions in such a manner as to engage with the external thread of the external thread member fitted in the fitting hole of the first clamping plate in a state wherein the axes of the first and third clamping recessed portions are aligned with each other and the axes of the second and fourth clamping recessed portions are aligned with each other, the first clamping recessed portion having a first spherical clamping face formed with the first radius over an overall circumference of a portion thereof open to the inner face of the first clamping plate, the second clamping recessed portion having a second spherical clamping face formed with the second radius over an overall circumference of a portion thereof open to the inner face of the first clamping plate, the third clamping recessed portion having a third spherical clamping face formed with the first radius over an overall circumference of a portion thereof open to the inner face of the second clamping plate, the fourth clamping recessed portion having a fourth spherical clamping face formed with the second radius over an overall circumference of a portion thereof open to the inner face of the second clamping plate, the first spherical member being fixed by the first and third spherical clamping faces while the second spherical member is fixed by the second and fourth spherical clamping faces to connect the first and second articles to each other if the external thread of the external thread member fitted in the fitting hole is tightened into the internal thread while the first spherical member is positioned between the first and third clamping recessed portions and the second spherical member is positioned between the second and fourth clamping recessed portions with the first and third clamping recessed portions opposed to each other and with the second and fourth clamping recessed portions opposed to each other.

According to another embodiment of the present invention, there is provided a joint including first and second clamping plates each having an elongated shape, and a single external thread member configured to fix the first and second clamping plates such that inner faces of the first and second clamping plates each of which is one of the opposite faces of the first or second clamping plate in the thicknesswise direction are opposed to each other, first and second clamping recessed portions being formed at locations of the inner face of the first clamping plate on the opposite sides in the longitudinal direction while a fitting hole is formed at a location between the first and second clamping recessed portions in such a manner as to extend through the first clamping plate and allow the external thread member to pass therethrough, third and fourth clamping recessed portions being formed at locations of the inner face of the second clamping plate on the opposite sides in the longitudinal direction while an internal thread is formed at a location between the third and fourth clamping recessed portions in such a manner as to engage with the external thread of the external thread member fitted in the fitting hole of the first clamping plate in a state wherein the axes of the first and third clamping recessed portions are aligned with each other and the axes of the second and fourth clamping recessed portions are aligned with each other, the first clamping recessed portion having a first spherical clamping face formed with a first radius over an overall circumference of a portion thereof open to the inner face of the first clamping plate, the second clamping recessed portion having a second spherical clamping face formed with a second radius over an overall circumference of a portion thereof open to the inner face of the first clamping plate, the third clamping recessed portion having a third spherical clamping face formed with the first radius over an overall circumference of a portion thereof open to the inner face of the second clamping plate, the fourth clamping recessed portion having a fourth spherical clamping face formed with the second radius over an overall circumference of a portion thereof open to the inner face of the second clamping plate.

With the connection structure and the joint, the first spherical member provided in a projecting manner on the first article can be turned in a desired direction between the first and third spherical clamping faces. Further, the second spherical member provided in a projecting manner on the second article can be turned in a desired direction between the second and fourth spherical clamping faces. Accordingly, the posture of the articles can be changed through the two spherical members.

Further, since the first spherical member is clamped between and fixed by the first and third spherical clamping faces and the second spherical member is clamped between and fixed by the second and fourth spherical clamping faces, the clamped fixation of the two first and second spherical members is performed with certainty.

Accordingly, a high degree of freedom in change of the posture of the articles can be assured, and besides the articles can be connected to each other with certainty.

### BRIEF DESCRIPTION OF THE DRAWINGS

FIGS. 1 to 4 are schematic perspective views of a connection structure and a joint to which the present invention is applied where they are applied between a display unit and a suction cup device;
FIG. 5 is a front elevational view of a connection device of the connection structure;

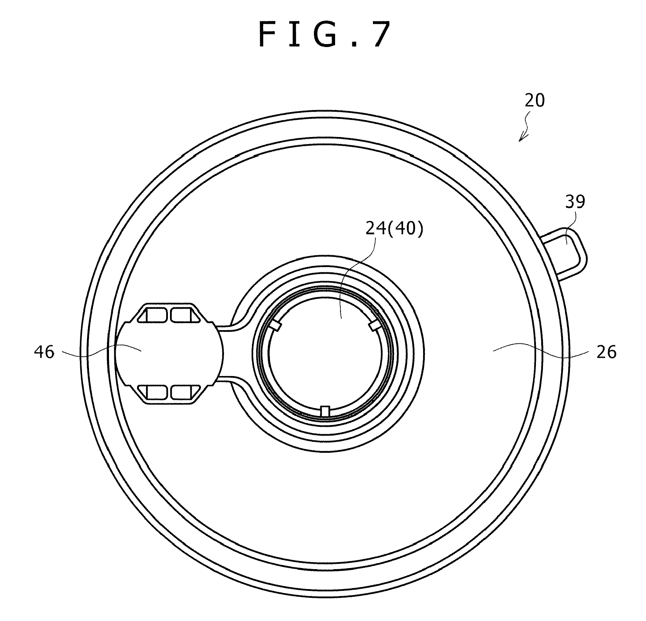

FIGS. 6, 7, 8 and 9 are a perspective view, a top plan view, a side elevational view and a side elevational sectional view, respectively, of a suction cup device shown in FIG. 1;
FIGS. 10A and 10B are a top plan view and a front elevational view, respectively, of a first clamping plate of the connection structure;
FIGS. 11B and 11B are a top plan view and a front elevational view, respectively, of a second clamping plate of the connection structure;
FIG. 12 is a schematic view of the connection structure in an assembled form;
FIG. 13 is a perspective view of an external thread member of the connection structure; and
FIGS. 14A and 14B are a top plan view and a front elevational view, respectively, of the external thread member.

### DETAILED DESCRIPTION OF THE PREFERRED EMBODIMENTS

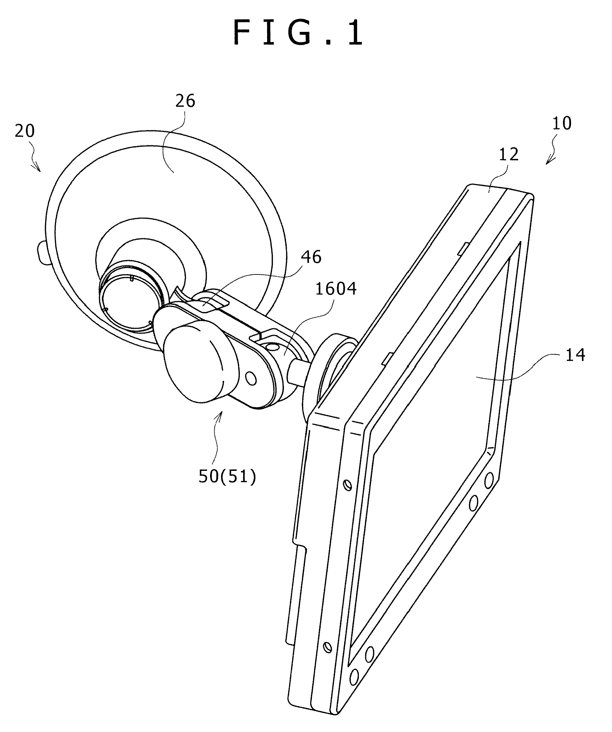

FIGS. 1 to 4 show a connection structure and a joint to which an embodiment of the present invention is applied and which are applied between a display unit 10 and a suction cup device 20.

Referring to FIGS. 1 to 4, the display unit 10 may be used as a display section of a car navigation system and includes a case 12 in the form of a rectangular plate and a liquid crystal display panel 14 accommodated in and held by the case 12.

The suction cup device 20 is used to attach the display unit 10 to the dashboard or the windshield of an automobile.

The display unit 10 and the suction cup device 20 are connected to each other such that the posture of the display unit 10 can be changed through a connection structure 50 and a joint 51 to which the embodiment of the present invention is applied. More particularly, the display unit 10 is attached for posture change to the dashboard or the windshield.

First, the display unit 10 is described. Then, the suction cup device 20 is described, whereafter the connection structure 50 is described.

First, description is given of the display unit 10.

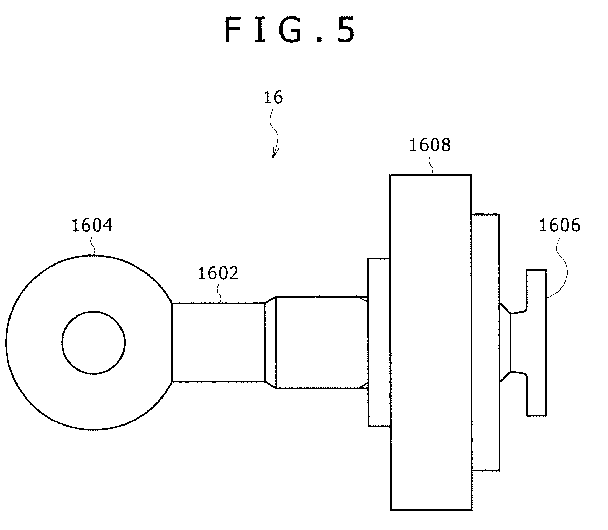

FIG. 5 shows a connection device 16.

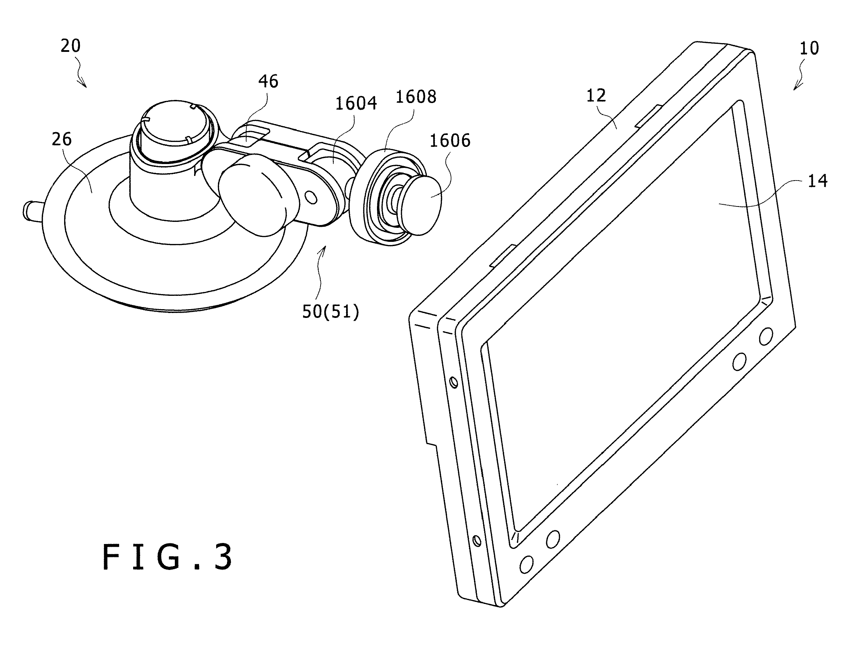

Referring to FIGS. 1 and 3, the front face of the case 12 exhibits a shape of a rectangular framework having four sides extending along the four sides of the liquid crystal display panel 14. Operation switches for performing power on/off operation, selection or changeover of a menu, change of the scale of the display map and so forth are provided on the front face of the case 12.

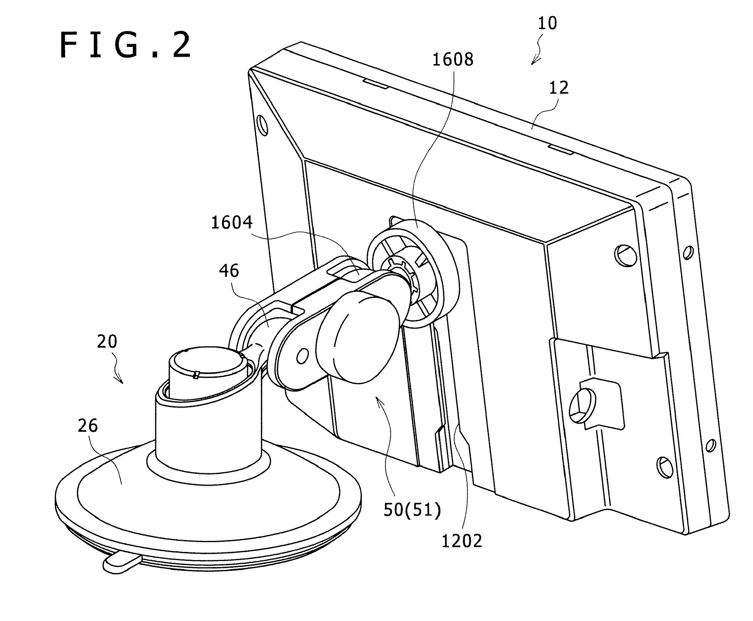

Referring to FIG. 2, an engaging groove 1202 is formed on the rear face of the case 12 as seen in FIG. 2, and the connection device 16 is removably attached to the engaging groove 1202.

Referring to FIG. 5, the connection device 16 includes a shaft portion 1602 having a first spherical member 1604 provided at a left end thereof in FIG. 5. Meanwhile, an engaging plate 1606 is provided at the other end, that is, at a right end in FIG. 5, of the shaft portion 1602 and is slidably inserted in the inside of the engaging groove 1202. A nut 1608 engages with a portion of the shaft portion 1602 rather near to the right end in FIG. 5.

The first spherical member 1604 is formed spherically with a first radius.

Assembly of the connection device 16 into the engaging groove 1202 is performed such that the engaging plate 1606 is inserted into and slidably moved along the inside of the engaging groove 1202 to a desired position and then the nut 1608 is tightened to clamp rear face portions of the case 12 on the opposite sides of the engaging groove 1202 by means of the nut 1608 and the engaging plate 1606. Where the connection device 16 is attached to the rear face of the case 12 in this manner, the first spherical member 1604 projects from the rear face of the case 12.

Accordingly, the connection device 16 is removably attached to the display unit 10 as an article. It is to be noted that the connection device 16 may otherwise be provided integrally with an article such as the display unit 10.

Now, the suction cup device 20 is described.

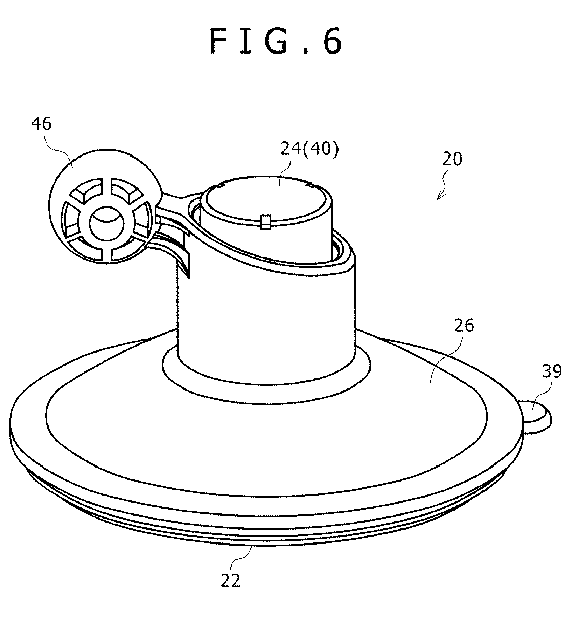

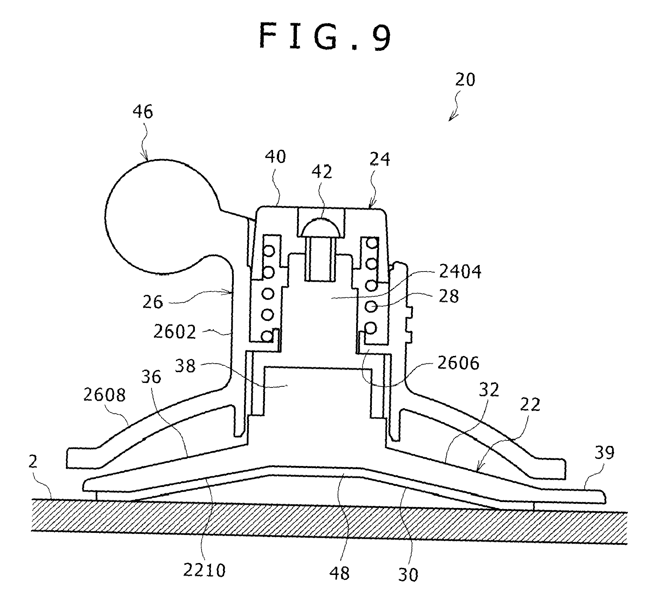

Referring to FIG. 6, the suction cup device 20 includes a suction cup 22, a shaft-like member 24, a case 26 and a resilient member 28 (refer to FIG. 9).

Referring to FIG. 9, the suction cup 22 has a suction face 30 on one of the opposite faces in a thicknesswise direction thereof and has a rear face 32 as the other face in the thicknesswise direction.

The suction cup 22 includes a disk-shaped suction cup body 36 on which the suction face 30 is formed. A suction cup shaft portion 38 is formed at and extends from the center of the rear face 32 of the suction cup body 36. A center shaft 2404 is connected at a base portion thereof to the suction cup shaft portion 38.

A piece portion 39 for being operated to detach the suction cup 22 is provided in a projecting manner on an outer edge of the suction cup body 36.

The suction cup body 36 can be formed from various known materials used for a suction cup in the past such as, for example, an urethane type material, a styrene type material or a silicon resin type material.

A concave attaching face 2210 is formed on a face of the suction cup 22 remote from the rear face 32, and a gel layer 48 formed from gel is bonded to the attaching face 2210 in such a manner as to cover the attaching face 2210. The suction face 30 is formed in a concave shape from the surface of the gel layer 48.

For such gel, gel of a synthetic resin type such as a polyethylene type, a styrene type and a silicon resin type can be used. Further, as the gel of a polyethylene type, for example, "COSMO SUPER GEL" by Cosmo Instruments Co., Ltd. which is an article on the market can be used. As the gel of a styrene type, for example, "NAGFLEX" by lnoac Corporation which is an article on the market can be used. As the gel of a silicon type, for example, "αGEL" by GELTEC Co., Ltd. which is an article on the market can be used.

Further, for the bonding of the gel layer 48 to the attaching face 2210, such a method of bonding by two-color molding or by means of a bonding agent can be adopted.

With such a suction cup 22 as described above, since the suction face 30 thereof is formed from the gel layer 48, even if the attaching object face 2 is formed as a leather embossed face which has fine convexes and concaves or provides a coarse feel, the suction face 30 is deformed following up the convex and concave geometry. Consequently, the suction face 30 can contact closely with the convex and concave face or coarse face without allowing a gap formed therebetween. This is advantageous in that such an article as the display unit 10 is attached with certainty to the attaching object face 2 such as the leather embossed face of the dashboard panel or the like.

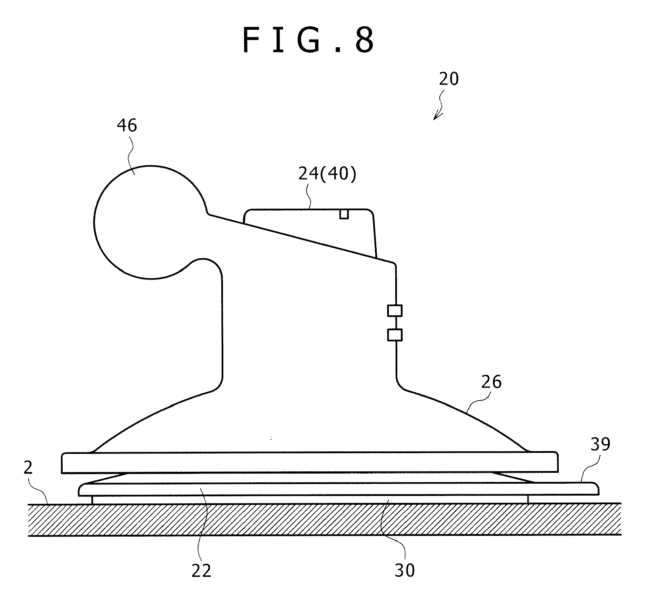

A cap 40 is fixed to an upper end in FIG. 8 of the center shaft 2404 by means of a screw 42. The shaft-like member 24 is formed from the cap 40 and the center shaft 2404.

The case 26 is coupled to the shaft-like member 24 for movement in a longitudinal direction of the shaft-like member 24.

The case 26 includes an outer tubular portion 2602 fitted on an outer circumferential face of the cap 40 for movement in an axial direction, a flange portion 2606 provided on an inner circumferential face of an intermediate portion of the outer tubular portion 2602 in the axial direction, and a conical or annular plate portion 2608 extending conically from one end of the outer tubular portion 2602 in the axial direction and covering the rear face 32 of the suction cup body 36. A second spherical member 46 is provided in a projecting manner at the other end of the outer tubular portion 2602 in the longitudinal direction.

The second spherical member 46 is formed in a spherical shape of a second radius. In the present embodiment, the first and second radii are equal to each other.

The coil spring 28 is interposed between the shaft-like member 24 and the case 26 and biases the case 26 in a direction toward the suction face 30.

It is to be noted that the coil spring 28 may be any member only if it biases the case 26 in the direction toward the suction face 30 and may be a rubber member or a solid damper.

The coil spring 28 extends between the bottom face of a concave portion of the cap 40 and the flange portion 2606 on the outer side of the center shaft 2404 but on the inner side of the outer tubular portion 2602. In the present embodiment, a biasing mechanism is formed from the coil spring 28, cap 40 and flange portion 2606.

Now, suction attachment of the suction cup device 20 to the attaching object face 2 is described.

First, the suction face 30 of the suction cup 22 of the suction cup device 20 is opposed to the attaching object face 2 and contacted at an outer circumference thereof with the attaching object face 2 as seen in FIG. 9. In this state, a space in which the air exists is formed between the suction face 30 and the attaching object face 2.

Then, the cap 40 is pressed toward the attaching object face 2, and then the fingers are removed from the cap 40.

As the cap 40 is pressed first, a central portion of the suction cup 22 is deformed in a direction in which it approaches the attaching object face 2 as seen in FIG. 8 until the suction face 30 closely contacts over the overall area thereof with the attaching object face 2 such as the dashboard or the windshield. Thereupon, the air existing in the space described above is discharged from between the suction face 30 and the attaching object face 2 so that a substantially vacuum state is established between the suction face 30 and the attaching object face 2. Consequently, the suction cup 22 is sucked to the attaching object face 2 and the suction cup device 20 is attached to the attaching object face 2 thereby.

Then, when the fingers are removed from the cap 40, by the resilient force of the coil spring 28, the annular plate portion 2608 of the case 26 contacts over an overall circumference of the outer periphery thereof with the rear face 32 of the suction cup 22 in a state wherein the suction face 30 is sucked to the attaching object face 2. Besides, by the resilient force of the coil spring 28, the annular plate portion 2608 of the case 26 is biased in the contacting direction and the center shaft 2404 is biased in a direction away from the attaching object face 2. Consequently, the suction cup device 20 is attached with certainty without being rendered unsteady to the attaching object face 2 such as the dashboard or the windshield.

It is to be noted that the suction cup device 20 may have any configuration and may be configured such that the annular plate portion 2608 of the case 26 may be provided in contact with a location of the attaching object face 2 positioned on the outer side of the suction cup 22 in a state wherein the suction surface 30 is sucked to the attaching object face 2. Or, the coil spring 28 may be replaced by any of various known configurations of a suction cup device provided between the center shaft 2404 and the case 26. For example, a cam mechanism may be provided such that it biases the annular plate portion 2608 of the case 26 so as to contact at an overall circumference of the outer periphery thereof with the rear face 32 of the suction cup 22 or with a location of the attaching object face 2 positioned on the outer side of the suction cup 22 in a state wherein the suction face 30 is sucked to the attaching object face 2.

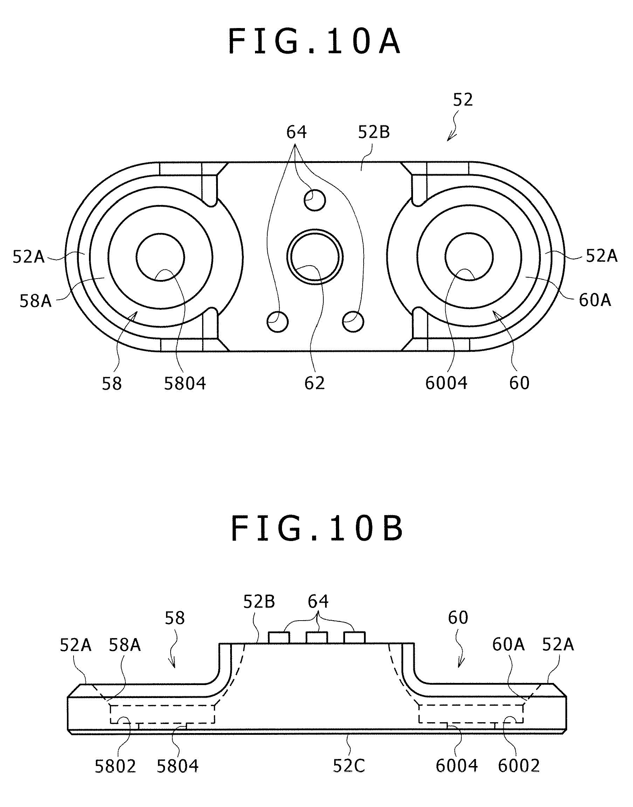

Now, the connection structure 50 is described with reference to FIGS. 10A to 14B.

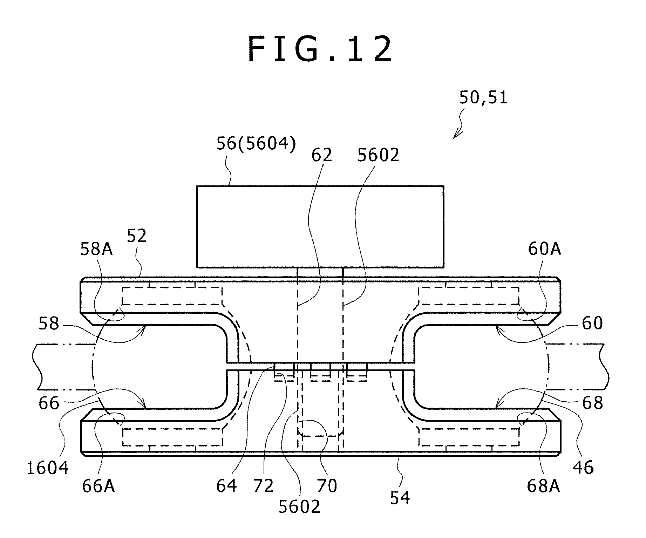

Referring first to FIG. 12, the connection structure 50 includes, in addition to the first spherical member 1604 and the second spherical member 46, a first clamping plate 52 having an elongated shape, and a second clamping plate 54 having an elongated shape. The connection structure 50 further includes an external thread member 56 for fixedly clamping the clamping plates 52 and 54 such that inner faces of the clamping plates 52 and 54 each of which is one of two opposite faces in the thicknesswise direction are opposed to each other. The joint 51 includes the first clamping plate 52 having an elongated shape, the second clamping plate 54 having an elongated shape and the single external thread member 56.

Referring now to FIGS. 10A to 11B, the first and second clamping plates 52 and 54 are formed such that the width thereof in a direction perpendicular to the longitudinal direction is uniform. In the present embodiment, the widths of the first and second clamping plates 52 and 54 are equal to each other, and the opposite ends of the first and second clamping plates 52 and 54 in the longitudinal direction are formed arcuately.

As seen in FIGS. 10A and 10B, a first clamping recessed portion 58 and a second clamping recessed portion 60 are formed at locations of an inner face of the first clamping plate 52 on the opposite sides in the longitudinal direction. Further, a fitting hole 62 is formed at a location of the first clamping plate 52 between the first and second clamping recessed portions 58 and 60 such that it allows insertion therethrough of the external thread of the external thread member 56.

Locations of the inner face of the first clamping plate 52 at the opposite sides in the longitudinal direction are formed as first inner faces 52A which extend on the same plane. Meanwhile, a location of the inner face of the first clamping plate 52 at a central portion in the longitudinal direction is formed as a second inner face 52B which projects from the first inner faces 52A and extends on a plane parallel to the plane of the first inner faces 52A.

Meanwhile, an outer face 52C which is the other face of the first clamping plate 52 in the thicknesswise direction is formed from a single flat face extending in parallel to the inner faces 52A and 52B.

The first clamping recessed portion 58 and the second clamping recessed portion 60 are formed on the first inner faces 52A while the fitting hole 62 is formed on the second inner face 52B.

The first clamping recessed portion 58 has a concave shape and has a first spherical clamping face 58A formed with the first radius over the overall circumference of a portion thereof which is open to the corresponding first inner face 52A.

In the present embodiment, a first recessed portion 5802 is formed at a depth greater than an imaginary extension plane of the first spherical clamping face 58A at the center of the first spherical clamping face 58A, and a hole 5804 is formed at the center of the first recessed portion 5802 such that it is open to the outer face 52C.

The second clamping recessed portion 60 has a concave shape and has a second spherical clamping face 60A formed with the second radius over the overall circumference of a portion thereof which is open to the first inner face 52A.

In the present embodiment, a second recessed portion 6002 is formed at a depth greater than an imaginary extension plane of the second spherical clamping face 60A at the center of the second spherical clamping face 60A, and a hole 6004 is formed at the center of the second recessed portion 6002 such that it is open to the outer face 52C.

The first and second radii are equal to each other as described above, and the fitting hole 62 is formed at the place of the center between the axis of the first clamping recessed portion 58 and the axis of the second clamping recessed portion 60.

A plurality of pins 64 for preventing turning motion of the first clamping plate 52 are provided in a projecting manner at different locations of the second inner face 52B around the fitting hole 62.

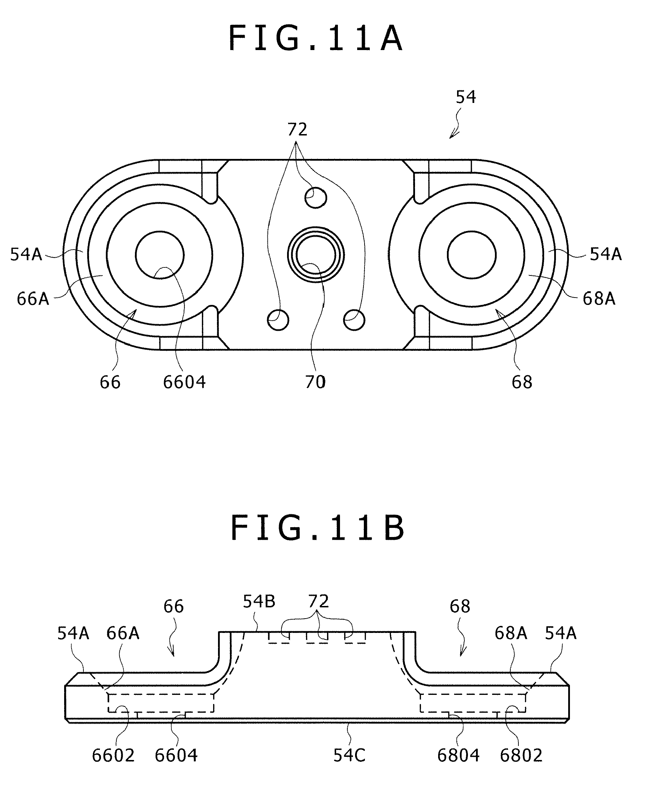

Referring now to FIGS. 11A and 11B, a third clamping recessed portion 66 and a fourth clamping recessed portion 68 are formed at locations of an inner face of the second clamping plate 54 on the opposite sides in the longitudinal direction. Further, an internal thread 70 is formed at a location between the third and fourth clamping recessed portions 66 and 68 for engaging with the external thread of the external thread member 56.

A pair of third inner faces 54A are formed at locations of the inner face of the second clamping plate 54 on the opposite sides in the longitudinal direction such that they extend on the same plane. Further, a location of the inner face at a central portion of the second clamping plate 54 in the longitudinal direction is formed as a fourth inner face 54B which projects from the third inner faces 54A and extends in a plane parallel to the plane of the third inner faces 54A.

Meanwhile, an outer face 54C which is the other face in the thicknesswise direction of the second clamping plate 54 is formed as a single face extending in parallel to the third and fourth internal faces 54A and 54B.

The third clamping recessed portion 66 and the fourth clamping recessed portion 68 are formed on the third internal faces 54A, and the internal thread 70 is formed at the fourth inner face 54B.

The third clamping recessed portion 66 has a concave shape and has a third spherical clamping face 66A formed with the first radius over the overall circumference of a portion thereof opened to the corresponding third internal face 54A.

In the present embodiment, a third recessed portion 6602 is formed at a depth greater than an imaginary extension plane of the third spherical clamping face 66A at the center of the third spherical clamping face 66A, and a hole 6604 is formed at the center of the third recessed portion 6602 such that it is opened to the outer face 54C.

The fourth clamping recessed portion 68 has a concave shape and has a fourth spherical clamping face 68A formed with the second radius over the overall circumference of a portion thereof opened to the corresponding third internal face 54A.

In the present embodiment, a fourth recessed portion 6802 is formed at a depth greater than an imaginary extension plane of the fourth spherical clamping face 68A at the center of the fourth spherical clamping face 68A, and a hole 6804 is formed at the center of the fourth recessed portion 6802 such that it is open to the outer face 54C.

The internal thread 70 is formed such that it is engaged with the external thread of the external thread member 56 fitted in the fitting hole 62 in a state wherein the axes of the first clamping recessed portion 58 and the third clamping recessed portion 66 are aligned with each other and the axes of the second clamping recessed portion 60 and the fourth clamping recessed portion 68 are aligned with each other.

As described above, the first and second radii have an equal dimension, and the internal thread 70 is formed at the location of the center between the axis of the third clamping recessed portion 66 and the axis of the fourth clamping recessed portion 68.

A plurality of engaging holes 72 are formed at different locations of the fourth inner face 54B around the internal thread 70 for engaging with the turning motion preventing pins 64.

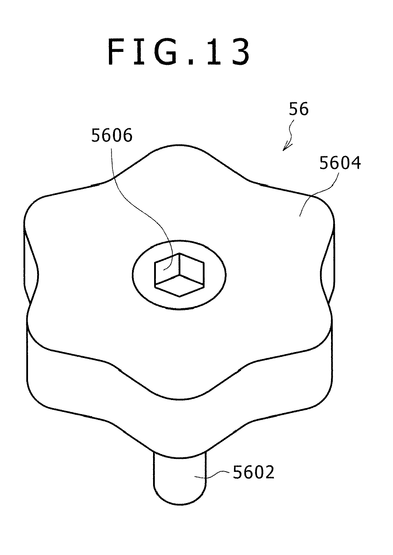

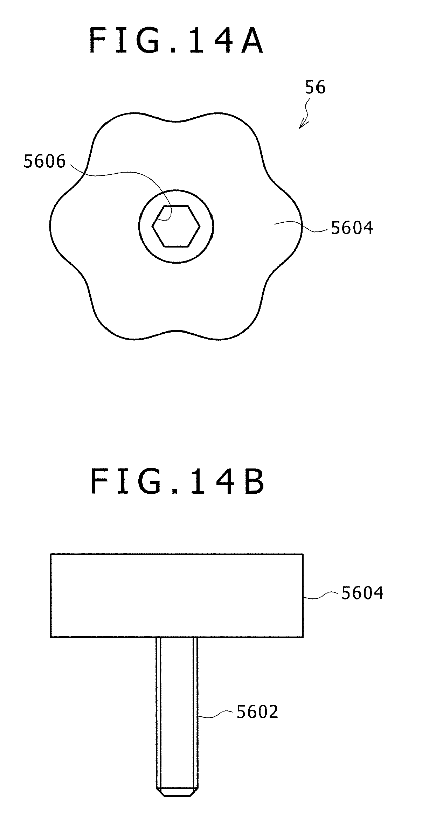

Referring now to FIGS. 13, 14A and 14B, the external thread member 56 has an external thread 5602 and a head portion 5604.

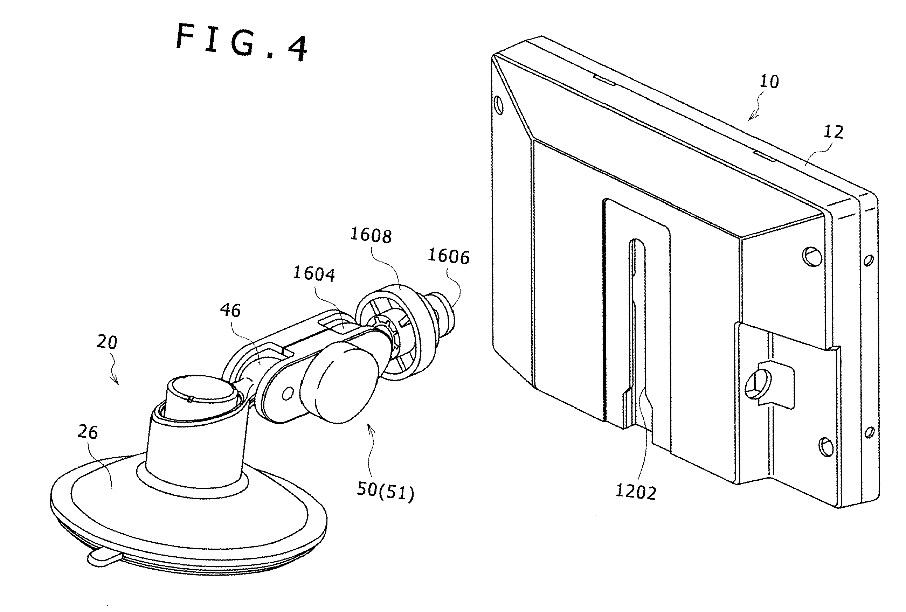

Further, as seen in FIGS. 2 and 4, the head portion 5604 has an outer profile formed with a dimension greater than the width of the first and second clamping plates 52 and 54 such that it can be operated for turning motion.

Further, in the present embodiment, the head portion 5604 has a hexagonal cross section having sides curved to the inner side so that the head portion 5604 can be gripped readily with fingers and operated to turn with certainty even by weak force.

An engaging hole 5606 for turning operation in the form of a hexagonal hole or the like is formed on the upper face of the head portion 5604 such that a tool can be removably engaged therewith so that the external thread member 56 can be tightened with certainty even at a narrow place.

The connection structure 50 and the joint 51 of the present embodiment are assembled in such a manner as seen in FIG. 12. Referring to FIG. 12, the first clamping recessed portion 58 and the third clamping recessed portion 66 are opposed to each other, and the second clamping recessed portion 60 and the fourth clamping recessed portion 68 are opposed to each other. Further, the first spherical member 1604 is positioned between the first clamping recessed portion 58 and the third clamping recessed portion 66, and the second spherical member 46 is positioned between the second clamping recessed portion 60 and the fourth clamping recessed portion 68.

Then, the head portion 5604 is operated to tighten the external thread 5602 of the external thread member 56 fitted in the fitting hole 62 into the internal thread 70. Consequently, the first spherical member 1604 is clamped between and fixed by the first spherical clamping face 58A and the third spherical clamping face 66A, and the second spherical member 46 is clamped between and fixed by the second spherical clamping face 60A and the fourth spherical clamping face 68A as seen in FIG. 12. It is to be noted that, in the fixed state described, a gap is assured between the second inner face 52B of the first clamping plate 52 and the fourth inner face 54B of the second clamping plate 54, and the inner faces 52B and 54B extend in parallel to each other.

According to the present embodiment, before the first and second spherical members 1604 and 46 are clamped and fixed, the first spherical member 1604 can be rotated in a desired direction between the first spherical clamping face 58A and the third spherical clamping face 66A. Further, the second spherical member 46 can be rotated in a desired direction between the second spherical clamping face 60A and the fourth spherical clamping face 68A. In other words, the display unit 10 can be attached in a desired posture with respect to the suction cup device 20 with certainty by means of the two spherical members 1604 and 46.

Further, since the first spherical member 1604 is clamped between and fixed by the first spherical clamping face 58A and the third spherical clamping face 66A both having a radius equal to that of the first spherical member 1604, and the second spherical member 46 is clamped between and fixed by the second spherical clamping face 60A and the fourth spherical clamping face 68A both having a radius equal to that of the second spherical member 46, clamped fixation of the first and second spherical members 1604 and 46 is performed with certainty.

Accordingly, the display unit 10 and the suction cup device 20 are connected to each other in a desired posture with certainty. More particularly, a high degree of freedom can be assured in change of the posture of the display unit 10 with respect to the dashboard or the windshield, and the display unit 10 can be attached in a desired posture.

Particularly where a attachment structure in the past is used to attach the display unit 10 to the dashboard or the windshield, since it has only one spherical member, the degree of freedom in change of the posture of the display unit 10 is so low that the range of the dashboard or the windshield within which the display unit 10 can be attached is sometimes restricted. In contrast, according to the present embodiment, since the posture of the display unit 10 can be changed freely through the first and second spherical members 1604 and 46, the range of the dashboard or the windshield within which the display unit 10 can be attached is expanded, which is advantageous in enhancement of the convenience in use.

Further, according to the present embodiment, both of the first and second spherical members 1604 and 46 can be simultaneously placed into a state wherein they can turn freely or into another state wherein they are clamped and fixed simultaneously by a simple operation of loosening or tightening the external thread member 56. Therefore, changing of the posture of the display apparatus 10 can be performed rapidly, which is advantageous in enhancement of the operability.

Further, in the present embodiment, the first and second spherical members 1604 and 46 are formed with an equal radius and the fitting hole 62 is formed at a location of the center between the axis of the first clamping recessed portion 58 and the axis of the second clamping recessed portion 60, and besides the internal thread 70 is formed at a location of the center between the axis of the third clamping recessed portion 66 and axis of the fourth clamping recessed portion 68. Therefore, the force of clamping the first spherical member 1604 between the first and third spherical clamping faces 58A and 66A and the force of clamping the second spherical member 46 between the second and fourth spherical clamping faces 60A and 68A by tightening the external thread member 56 can be made equal to each other. Consequently, the first and second spherical members 1604 and 46 can be clamped and fixed advantageously with certainty.

It is to be noted that, although the first and second spherical members 1604 and 46 may have different radii from each other and the location of the external thread member 56 may be displaced from the position of the center between the axis of the first clamping recessed portion 58 and the axis of the second clamping recessed portion 60, where such a configuration as is used in the present embodiment is applied, the structure for making the forces of clamping the first and second spherical members 1604 and 46 equal to each other can be simplified. This is advantageous in achievement of reduction of the production cost.

Further, while, in the embodiment described above, the first and second articles to be connected by the connection structure 50 and the joint 51 are the display unit 10 (particularly the connection device 16 on the rear face of the case 12 of the display unit 10) and the suction cup device 20 (particularly the case 26 of the suction cup device 20), two suction cup devices 20 (particularly the cases 26 of the two suction cup devices 20) may alternatively be connected to each other by the connection structure 50 and the joint 51.

Further, the first and second articles to be connected to each other by the connection structure 50 and the joint 51 may be portions or components of articles. Further, each article is not limited to an article disposed in an automobile cabin as in the embodiment described hereinabove but can be applied widely to various articles which may be disposed indoors or outdoors and include structures such as buildings.

It should be understood by those skilled in the art that various modifications, combinations, subcombinations and alterations may occur depending on design requirements and other factors insofar as they are within the scope of the appended claims or the equivalents thereof.

## Claims

1. A connection structure, comprising:
a first spherical member provided in a projecting manner on a first article;
a second spherical member provided in a projecting manner on a second article;
first and second clamping plates each having an elongated shape; and
a single external thread member configured to fix the first and second clamping plates such that inner faces of the first and second clamping plates each of which is one of the opposite faces of the first or second clamping plate in the thicknesswise direction are opposed to each other;
the first spherical member being formed spherically with a first radius;
the second spherical member being formed spherically with a second radius;
first and second clamping recessed portions being formed at locations of the inner face of the first clamping plate on the opposite sides in the longitudinal direction while a fitting hole is formed at a location between the first and second clamping recessed portions in such a manner as to extend through the first clamping plate and allow the external thread member to pass therethrough;
third and fourth clamping recessed portions being formed at locations of the inner face of the second clamping plate on the opposite sides in the longitudinal direction while an internal thread is formed at a location between the third and fourth clamping recessed portions in such a manner as to engage with the external thread of the external thread member fitted in the fitting hole of the first clamping plate in a state wherein the axes of the first and third clamping recessed portions are aligned with each other and the axes of the second and fourth clamping recessed portions are aligned with each other;
the first clamping recessed portion having a first spherical clamping face formed with the first radius over an overall circumference of a portion thereof open to the inner face of the first clamping plate;
the second clamping recessed portion having a second spherical clamping face formed with the second radius over an overall circumference of a portion thereof open to the inner face of the first clamping plate;
the third clamping recessed portion having a third spherical clamping face formed with the first radius over an overall circumference of a portion thereof open to the inner face of the second clamping plate;
the fourth clamping recessed portion having a fourth spherical clamping face formed with the second radius over an overall circumference of a portion thereof open to the inner face of the second clamping plate;
the first spherical member being fixed by the first and third spherical clamping faces while the second spherical member is fixed by the second and fourth spherical clamping faces to connect the first and second articles to each other if the external thread of the external thread member fitted in the fitting hole is tightened into the internal thread while the first spherical member is positioned between the first and third clamping recessed portions and the second spherical member is positioned between the second and fourth clamping recessed portions with the first and third clamping recessed portions opposed to each other and with the second and fourth clamping recessed portions opposed to each other.

2. The connection structure according to claim 1, wherein the first clamping recessed portion includes a first recessed portion formed at a depth greater than an imaginary extension plane of the first spherical clamping face at the center of the first spherical clamping face;
the second clamping recessed portion includes a second recessed portion formed at a depth greater than an imaginary extension plane of the second spherical clamping face at the center of the second spherical clamping face;
the third clamping recessed portion includes a third recessed portion formed at a depth greater than an imaginary extension plane of the third spherical clamping face at the center of the third spherical clamping face; and
the fourth clamping recessed portion includes a fourth recessed portion formed at a depth greater than an imaginary extension plane of the fourth spherical clamping face at the center of the fourth spherical clamping face.

3. The connection structure according to claim 1 or 2, wherein the first and second radii are equal to each other;
the fitting hole is formed at a location of the center between the axes of the first and second clamping recessed portions; and
the internal thread is formed at a location of the center between the axes of the third and fourth clamping recessed portions.

4. The article attaching tool according to claim 1, 2 or 3, wherein locations of the inner face of the first clamping plate on the opposite sides in the longitudinal direction are formed as first inner faces which extend in the same plane while a location of the inner face of the first clamping plate at a central portion in the longitudinal direction is formed as a second inner face which projects from the first inner faces and extends in a plane parallel to the plane of the first inner faces;
the first and second clamping recessed portions are formed on the first inner faces and the insertion hole is formed on the second inner face;
locations of the inner face of the second clamping plate on the opposite sides in the longitudinal direction are formed as third inner faces which extend in the same plane while a location of the inner face of the second clamping plate at a central portion in the longitudinal direction is formed as a fourth inner face which projects from the third inner faces and extends in a plane parallel to the plane of the third inner faces; and
the third and fourth clamping recessed portions are formed on the third inner faces and the internal thread is formed on the fourth inner face.

5. The connection structure according to claim 4, wherein
a plurality of pins and a plurality of engaging holes are provided at locations of the second inner face around the fitting hole and locations of the fourth inner face around the internal thread in such a manner as to engage with each other in a state wherein the second and fourth inner faces are opposed to each other with the axes of the first and third clamping recessed portions aligned with each other and with the axes of the second and fourth clamping recessed portions aligned with each other.

6. The connection structure according to claims 1 to 5, wherein the outer face of each of the first and second clamping plates which is the other face in the thicknesswise direction is formed from a single flat face extending in parallel to the inner face of the first or second clamping plate.

7. The connection structure according to claims 1 to 6, wherein the width of the first and second clamping plates in a direction perpendicular to the longitudinal direction is uniform; and
the widths of the first and second clamping plates are equal to each other.

8. The connection structure according to claim 1, wherein
the external thread member has a head portion having an outer diameter greater than that of the external thread; and
the head portion has an outer diameter greater than the width of the first and second clamping plates.

9. The connection structure according to claim 8, wherein
the head portion of the external thread member has a hexagonal sectional shape whose sides are curved to the inner side.

10. The connection structure according to claim 8 or 9, wherein
an engaging hole for turning operation is formed at an upper face of the head portion such that a tool is removably fitted therein.

11. The connection structure according to claims 1 to 10, wherein the first article is a connection device configured to be removable attached to an article and the second article is a case of a suction cup device;
the suction cup device comprising:
a suction cup configured such that one of the opposite faces thereof in the thicknesswise direction is formed as a suction face while the other one of the faces thereof is formed as a back face; and
a center shaft which projects in a direction away from the back face of the suction cup along the thicknesswise direction from the center of the back face;
wherein the case covers the rear face of the suction cup and is provided for contacting with an outer peripheral portion of the rear face of the suction cup or a location of the attaching object face positioned on the outer side of the suction cup in a state wherein the suction face is sucked to the attaching object face; and
a biasing mechanism which biases the case in the state wherein the suction face is sucked to the attaching object face in a direction in which the case contacts with the outer peripheral portion of the rear face of the suction cup or the location of the attaching object face and biases the center shaft in a direction away from the attaching object face.

12. A joint, comprising:
first and second clamping plates each having an elongated shape; and
a single external thread member configured to fix the first and second clamping plates such that inner faces of the first and second clamping plates each of which is one of the opposite faces of the first or second clamping plate in the thicknesswise direction are opposed to each other;
first and second clamping recessed portions being formed at locations of the inner face of the first clamping plate on the opposite sides in the longitudinal direction while a fitting hole is formed at a location between the first and second clamping recessed portions in such a manner as to extend through the first clamping plate and allow the external thread member to pass therethrough;
third and fourth clamping recessed portions being formed at locations of the inner face of the second clamping plate on the opposite sides in the longitudinal direction while an internal thread is formed at a location between the third and fourth clamping recessed portions in such a manner as to engage with the external thread of the external thread member fitted in the fitting hole of the first clamping plate in a state wherein the axes of the first and third clamping recessed portions are aligned with each other and the axes of the second and fourth clamping recessed portions are aligned with each other;
the first clamping recessed portion having a first spherical clamping face formed with a first radius over an overall circumference of a portion thereof open to the inner face of the first clamping plate;
the second clamping recessed portion having a second spherical clamping face formed with a second radius over an overall circumference of a portion thereof open to the inner face of the first clamping plate;
the third clamping recessed portion having a third spherical clamping face formed with the first radius over an overall circumference of a portion thereof open to the inner face of the second clamping plate;
the fourth clamping recessed portion having a fourth spherical clamping face formed with the second radius over an overall circumference of a portion thereof open to the inner face of the second clamping plate.

13. The joint according to claim 12, wherein the first clamping recessed portion includes a first recessed portion formed at a depth greater than an imaginary extension plane of the first spherical clamping face at the center of the first spherical clamping face;
the second clamping recessed portion includes a second recessed portion formed at a depth greater than an imaginary extension plane of the second spherical clamping face at the center of the second spherical clamping face;
the third clamping recessed portion includes a third recessed portion formed at a depth greater than an imaginary extension plane of the third spherical clamping face at the center of the third spherical clamping face; and
the fourth clamping recessed portion includes a fourth recessed portion formed at a depth greater than an imaginary extension plane of the fourth spherical clamping face at the center of the fourth spherical clamping face.

14. The joint according to claim 12 or 13, wherein the first and second radii are equal to each other;
the fitting hole is formed at a location of the center between the axes of the first and second clamping recessed portions; and
the internal thread is formed at a location of the center between the axes of the third and fourth clamping recessed portions.

15. The joint according to claim 12, 13 or 14, wherein locations of the inner face of the first clamping plate on the opposite sides in the longitudinal direction are formed as first inner faces which extend in the same plane while a location of the inner face of the first clamping plate at a central portion in the longitudinal direction is formed as a second inner face which projects from the first inner faces and extends in a plane parallel to the plane of the first inner faces;
the first and second clamping recessed portions are formed on the first inner faces and the insertion hole is formed on the second inner face;
locations of the inner face of the second clamping plate on the opposite sides in the longitudinal direction are formed as third inner faces which extend in the same plane while a location of the inner face of the second clamping plate at a central portion in the longitudinal direction is formed as a fourth inner face which projects from the third inner faces and extends in a plane parallel to the plane of the third inner faces; and
the third and fourth clamping recessed portions are formed on the third inner faces and the internal thread is formed on the fourth inner face.

16. The joint according to claim 15, wherein
a plurality of pins and a plurality of engaging holes are provided at locations of the second inner face around the fitting hole and locations of the fourth inner face around the internal thread in such a manner as to engage with each other in a state wherein the second and fourth inner faces are opposed to each other with the axes of the first and third clamping recessed portions aligned with each other and with the axes of the second and fourth clamping recessed portions aligned with each other.

17. The joint according to claims 12 to 16, wherein the outer face of each of the first and second clamping plates which is the other face in the thicknesswise direction is formed from a single flat face extending in parallel to the inner face of the first or second clamping plate.

18. The joint according to claims 12 to 17, wherein the width of the first and second clamping plates in a direction perpendicular to the longitudinal direction is uniform; and
the widths of the first and second clamping plates are equal to each other.

19. The joint according to claims 12 to 18, wherein
the external thread member has a head portion having an outer diameter greater than that of the external thread; and
the head portion has an outer diameter greater than the width of the first and second clamping plates.

20. The joint according to claim 19, wherein
the head portion of the external thread member has a hexagonal sectional shape whose sides are curved to the inner side.

21. The joint according to claim 19 or 20, wherein
an engaging hole for turning operation is formed at an upper face of the head portion such that a tool is removably fitted therein.
